# EUROPÄISCHE PATENTSCHRIFT

(11) **EP 2 732 162 B1**
(45) Veröffentlichungstag und Bekanntmachung des Hinweises auf die Patenterteilung: **20.02.2019**
(21) Anmeldenummer: 12729120.1
(22) Anmeldetag: 21.06.2012
(51) Int. Cl.: F04B 17/04, F04B 53/12, F01N 3/20

(54) **DOSIEREINHEIT MIT REDUZIERTEM TOTVOLUMEN**
METERING UNIT HAVING A REDUCED DEAD VOLUME
UNITÉ DE DOSAGE À VOLUME MORT RÉDUIT

(30) Priorität: 11.07.2011 DE 102011078939
(43) Veröffentlichungstag der Anmeldung: 21.05.2014
(73) Patentinhaber: Robert Bosch GmbH, 70442 Stuttgart (DE)
(72) Erfinder: BOEHLAND, Peter, 71672 Marbach (DE); NENTWIG, Godehard, 70499 Stuttgart (DE)
(86) Internationale Anmeldenummer: PCT/EP2012/062012
(87) Internationale Veröffentlichungsnummer: WO 2013/007492

(56) Entgegenhaltungen:
- EP-A2- 2 131 020
- WO-A1-89/08189
- US-A- 4 685 517
- US-A1- 2011 062 357

## Beschreibung

### Stand der Technik

Zur Erfüllung stetig steigender Schadstoffnormen, wie zum Beispiel Euro 5 oder der demnächst erwartenden Euro 6, werden die Abgase von Verbrennungskraftmaschinen mittels Abgasnachbehandlungssystemen behandelt. Ein Verfahren, was sich zur Reduzierung von NOₓ-Bestandteilen im Abgas, insbesondere von selbstzündenden Verbrennungskraftmaschinen etabliert hat, ist das SCR-Verfahren (SCR = Selective Catalytic Reduction). Gemäß dieses Verfahrens wird ein Betriebs-/Hilfsstoff, insbesondere ein Reduktionsmittel, wie zum Beispiel Harnstoff oder eine Harnstoff-Wasser-Lösung in die Abgasströmung im Abgastrakt der Verbrennungskraftmaschine eingespritzt. Das Einbringen des Betriebs-/Hilfsstoffes, insbesondere des Reduktionsmittels in die Abgasströmung erfolgt in Gestalt eines Sprühnebels, bei dem ein hoher Zerstäubungsgrad des Betriebs-/Hilfsstoffes, insbesondere des Reduktionsmittels erreicht wird. Mittels des Betriebs-/Hilfsstoffes, insbesondere des Reduktionsmittels wird NOₓ im Abgas von Verbrennungskraftmaschinen in H₂O und N₂ umgewandelt. Heute am Markt eingesetzte Betriebs-/Hilfsstoffe, insbesondere das unter dem Handelsnamen AdBlue® eingesetzte Reduktionsmittel sind weit verbreitet im Einsatz.

Bei Abgasnachbehandlungssystemen wird in der Regel eine Pumpeneinheit mit einer Düse zu einem Modul zusammengefasst ("Integrated Dosing System"). Im Integrated Dosing Modul (IDM) sind eine Pumpeneinheit und die Düseneinheit zusammengefasst. Die Düse wird druckgesteuert geöffnet. Im Ausgangszustand des Systems ist eine Magnetspule nicht bestromt. Auf einen Anker wirkt fast keine magnetische Kraft und eine Feder schiebt einen Kolben im Dosiermodul samt Anker in Richtung auf einen Hubanschlag. Der Hubanschlag kann beispielsweise über eine Einstellscheibe realisiert sein. Bei Förderbeginn des Dosiermodules wird die Magnetspule bestromt und über die Magnetkraft auf den Anker wird ein Kolben in Richtung eines Pumpenraumes bewegt. Aufgrund dessen steigt der Druck im Pumpenraum an und ein Druckventil öffnet. Der Druck öffnet die Düse, so dass der Betriebs-/Hilfsstoff beispielsweise in den Abgastrakt einer Brennkraftmaschine eindosiert werden kann. Die Bewegung des Kolbens samt Anker wird über einen zweiten im Dosiermodul vorgesehenen Hubanschlag beendet. Bei Erreichen des zweiten Hubanschlages wird die Eindosierung des Betriebs-/Hilfsstoffes in den Abgastrakt der Verbrennungskraftmaschine beendet. Über den Kolbenhub wird die Menge des einzuspritzenden Betriebs-/Hilfsstoffes definiert. Wird der Strom ausgeschaltet, fällt aufgrund einer nicht mehr vorliegenden Bestromung der Magnetspule deren Magnetkraft ab. Fällt die Magnetkraft so weit ab, dass diese kleiner als die Federkraft ist, wird der Kolben samt Anker wieder zurückbewegt und der Pumpenraum des Dosiermodules wird über ein beispielsweise als Kugelventil ausgebildetes Ventil wieder befüllt. Anschließend kann die nächste Einspritzung erfolgen.

Damit die Düse, über die der Betriebs-/Hilfsstoff als feinverteilter Sprühnebel in den Abgastrakt eindosiert wird, nicht unkontrolliert durch einen Vorförderdruck oder durch Druckschwingungen im Dosiermodul öffnet und ein hoher Einspritzdruck sichergestellt wird, hat die Düse, über die der Betriebs-/Hilfsstoff als feinverteilter Tröpfchennebel in den Abgastrakt der Verbrennungskraftmaschine eindosiert wird, einen relativ hohen Öffnungsdruck, der ≥ 6 bar beträgt.

Um ein Selbstentlüften des Dosiermoduls zu erreichen, ist sicherzustellen, dass im Pumpenraum des Dosiermodules mindestens der Öffnungsdruck der Düse auch bei vollständiger Luftbefüllung des Pumpenraumes erreicht werden kann. Dies lässt sich durch ein kleines Pumpenraumvolumen im Verhältnis zum Pumpvolumen erreichen. Wird beispielsweise im Pumpenraum eine Feder angeordnet, welche einen Schließkörper für ein Ventil beaufschlagt, wird das vorteilhafte kleine Pumpenraumvolumen nicht erreicht und der Pumpenraum ist in relativ aufwendiger Weise über eine Vorförderpumpe zu entlüften. Dies erfordert insgesamt einen erhöhten Aufwand in Bezug auf die Entlüftungsmöglichkeit des Gesamtsystemes und bringt zwangsläufig dessen Verteuerung mit sich.

EP 2 131 020 A2 bezieht sich auf ein Verfahren zur Dosierung eines Mediums. In den Abgasstrom einer Verbrennungskraftmaschine, die einen SCR-Katalysator umfasst, wird ein Medium von einem Tank in den Abgasstrom an einer Position stromauf des SCR-Katalysators mittels eines Injektors entsprechend eines ersten Dosiermusters zur Reduktion eines definierten Anteiles von NOₓ im Abgasstrom entsprechend eines ersten Bereiches von Betriebsparametern der Verbrennungskraftmaschine eingebracht. Im Rahmen eines zweiten Satzes von Parametern der Verbrennungskraftmaschine wird das Medium entsprechend eines zweiten Dosiermusters zur Ermöglichung eines Wärmeübergangs zwischen dem Injektor und dem eingebrachten Medium betrieben. Die Eindosierung des Mediums erfolgt in Abhängigkeit ob die Betriebsparameter der Verbrennungskraftmaschine in einem ersten Bereich von Betriebsparametern liegen oder innerhalb eines zweiten Bereiches von Betriebsparametern. Das Eindosierungssystem zur Eindosierung des Mediums in den Abgasstrom der Verbrennungskraftmaschine umfasst einen Vorratstank, ein Injektormodul mit einem Sprühnebelerzeuger und einer Dosierpumpe, welche das Medium am Tank zum Dosiermodul fördert und mittels einer Dosiersteuerungseinheit über welche das Injektormodul gesteuert wird.

### Darstellung der Erfindung

Erfindungsgemäß wird vorgeschlagen, im Dosiermodul ein Saugventil vorzusehen, welches keine Rückstellfeder aufweist und welches den Pumpenraum begrenzt. Dieses Saugventil wird von außerhalb des Pumpenraumes über ein Betätigungselement, sei es ein stab- oder stangenförmig ausgebildetes Zugelement oder sei es ein Kolben oder dergleichen betätigt.

In einer Ausführungsvariante des der Erfindung zugrundeliegenden Gedankens, kann beispielsweise ein im Pumpenraum vorgesehenes Ventil als Kugelventil ausgebildet sein und entweder ein kugelförmiges Schließelement oder ein halbkugelförmiges Schließelement aufweisen. Dieses ist über ein stab- oder stangenförmig ausgebildetes Zugglied mit einem Federelement verbunden, welches außerhalb des Pumpenraumes im Dosiermodul angeordnet ist. Durch einen Durchgangskanal im Pumpenkolben erstreckt sich das mit dem Schließelement verbundene stab- oder stangenförmig ausgebildete Zugelement zu der Feder außerhalb des Pumpenraumes, die ihrerseits in einem Federhalter gehalten ist.

Während das stab- oder stangenförmig ausgebildete Zugelement über das Federelement beaufschlagt ist, welches sich im Federhalter abstützt, ist der Pumpenkolben, durch dessen Durchgangskanal sich das stab- oder stangenförmig ausgebildete Zugelement erstreckt, seinerseits mit einer Rückstellfeder beaufschlagt. Die Rückstellfeder stützt sich an einer Schulter des Pumpenkolbens einerseits und andererseits an einer den Pumpenkolben samt einem Führungskörper umgebenden hülsenförmigen Bauteil, einer Führungshülse, ab.

### Vorteile der Erfindung

Die erfindungsgemäß vorgeschlagene Ausführungsmöglichkeit eines Dosiermodules für ein Abgasnachbehandlungssystem zeichnet sich durch ein deutlich verringertes Volumen des Pumpenraumes aus, im Vergleich zu einem Ausführungsvergleich, bei dem ein Federelement im Pumpenraum angeordnet ist. Es lässt sich eine bessere Befüllung des Pumpenraumes durch weniger Drosselstellen im Füllpfad und ein größerer Saugquerschnitt eines ein kugelförmig oder halbkugelförmig ausgebildetes Schließelement aufweisenden Ventiles erreichen. Dadurch kann die Füllfrequenz gesteigert werden. Des Weiteren lässt sich eine erheblich verbesserte Mengengenauigkeit durch leichtere Einstellung des Pumpenkolbenhubes erreichen. Schließlich lässt sich mit der erfindungsgemäß vorgeschlagenen Lösung eine bessere Mengengenauigkeit erreichen. Der Druckaufbau im Pumpenraum verläuft aufgrund von dessen geringem Volumen sehr schnell. Durch die erfindungsgemäß vorgeschlagene Lösung lässt sich eine erheblich verringerte Leckage erreichen, da die Leckage, die sich zwangsläufig bei Ausführungen mit Steuerquerschnitt einstellt, entfällt und die Leckage, die sich über die Kolbenführung einstellt, vernachlässigbar gering ist.

### Kurze Beschreibung der Zeichnung

Anhand der Zeichnung wird die Erfindung nachgehend eingehender beschrieben.

Es zeigt:
- Figur 1: in schematischer Weise die Komponenten eines Abgasnachbehandlungssystems,
- Figur 2: ein Beispiel eines Dosiermodules mit einem verringerten Pumpenraumvolumen und
- Figur 3: eine Ausführungsform des erfindungsgemäß vorgeschlagenen Dosiermodules mit einem einen Führungskörper durchsetzenden Druckbolzen.

### Ausführungsvarianten

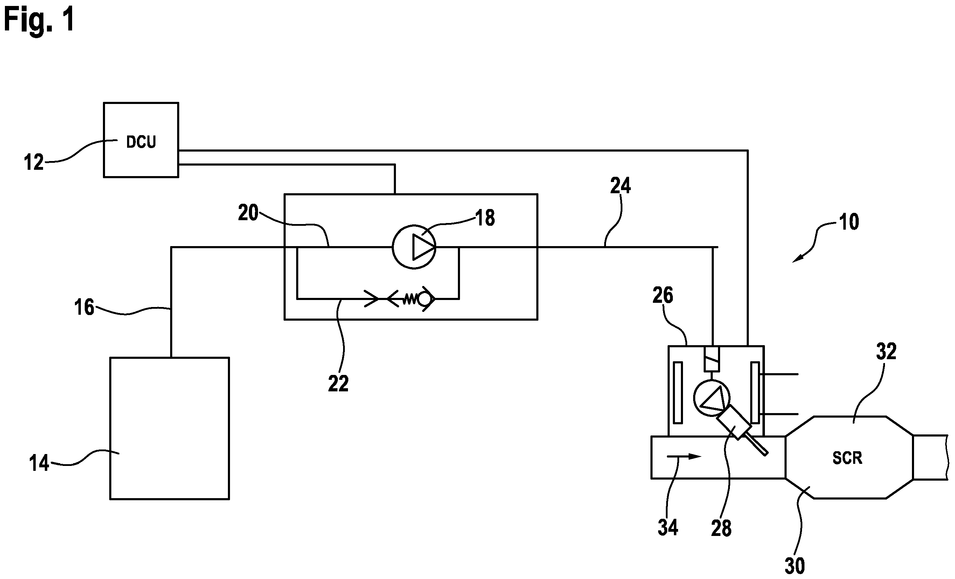

Figur 1 zeigt die Komponente eines Abgasnachbehandlungssystems in schematischer Darstellung.

Figur 1 zeigt ein Abgasnachbehandlungssystem 10, welches durch ein Steuergerät 12, welches hier nur schematisch angedeutet ist, gesteuert wird. Das Abgasnachbehandlungssystem 10 gemäß der Darstellung in Figur 1 umfasst einen Vorratstank 14, in dem ein Betriebs-/Hilfsstoff, insbesondere ein Reduktionsmittel wie beispielsweise Harnstoff oder eine Harnstoff-Wasser-Lösung aufgenommen wird. Je nachdem, welche Zusätze oder weitere Additive dem Betriebs-/Hilfsstoff beigemischt werden, liegt dessen Gefrierpunkt bei einer Temperatur von etwa -11°C. Vom Vorratstank 14, in dem der Betriebs-/Hilfsstoff bevorratet wird, erstreckt sich eine Saugleitung 16 zu einem Förderaggregat 18. Dem Förderaggregat 18 ist in der Saugleitung 16 ein Filter 20 vorgeschaltet. Vor dem Filter 20 zweigt von der Saugleitung 16 ein Bypass 22 ab, in dem Drosselelemente sowie Rückschlagventile aufgenommen sein können. Der Bypass 22 mündet in Strömungsrichtung des Betriebs-/Hilfsstoffes gesehen hinter dem Förderaggregat 18 auf dessen Druckseite in eine Druckleitung 24. Die Druckleitung 24 erstreckt sich zu einem Dosiermodul 28. Im Dosiermodul 28 wird ein Sprühnebel erzeugt, der über das Dosiermodul 28 in einen Abgastrakt 30 einer hier nicht näher dargestellten Verbrennungskraftmaschine eindosiert werden kann. Der Abgastrakt 30 führt eine Abgasströmung 34, welche entlang des Dosiermodules 28 strömt und in einer SCR-Kammer 32 nachbehandelt wird. Dort werden die NOₓ-Bestandteile des Abgases zu H₂O und N₂ reduziert.

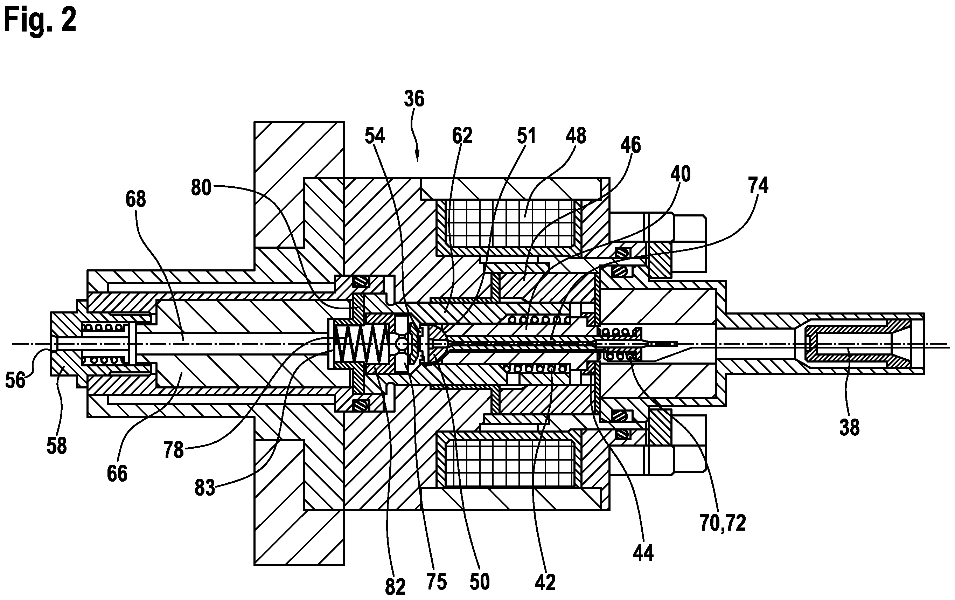

Figur 2 zeigt ein Beispiel eines Dosiermodules für ein Abgasnachbehandlungssystem mit einem verringerten Pumpenraumvolumen.

Der Darstellung gemäß Figur 2 ist zu entnehmen, dass das Dosiermodul 28 des Abgasnachbehandlungssystems 10 gemäß dieser Ausführungsvariante ein Gehäuse 36 umfasst. In das Gehäuse 36 des Dosiermodules 28 mündet ein Füllpfad 38, welcher ein weiteres Filterelement umfassen kann und über welchem der Betriebs-/Hilfsstoff dem Dosiermodul 28 zuströmt. Wie der Darstellung gemäß 2 entnommen werden kann, liegt im Füllpfad 38 ein Pumpenkolben 40. Der Pumpenkolben 40 ist über eine Rückstellfeder 42 beaufschlagt. Die Rückstellfeder 42 stützt sich an einer Schulter, die an der äußeren Mantelfläche des Pumpenkolbens 40 angeordnet ist einerseits ab und andererseits an einer Schulter, die an einer den Pumpenkolben 40 umschließenden Führungshülse 62 ausgebildet ist. Durch den Pumpenkolben 40 gemäß der Darstellung in Figur 2 erstreckt sich ein Kanal. Der Kanal ist durchgängig ausgebildet und erstreckt sich ausgehend von einem Schließelement 50 im Pumpenraum 54 zu einem Federhalter 72, der ein Federelement 70 aufnimmt.

Das Dosiermodul 28 gemäß dem in Figur 2 dargestellten Beispiel umfasst des Weiteren eine Einstellscheibe 44, über welche der Förderhub des Pumpenkolbens 40 eingestellt werden kann. Wie aus Figur 2 des Weiteren hervorgeht, ist die die Rückstellfeder 42 umschließende Führungshülse 62 ihrerseits von einem Anker 46 umgeben, der bei Bestromung einer den Anker 46 umschließenden Magnetspule 48 betätigt wird.

Ein Pumpenraum 54 ist durch ein hier halbkugelförmig ausgebildetes Schließelement 50, das in einen Ventilsitz 51 stellbar ist, verschlossen. Der Pumpenraum 54 wird durch die Führungshülse 62, welche den Pumpenkolben 40 umschließt, sowie die Stirnseite des Pumpenkolbens 40 begrenzt, an der der Ventilsitz 51 für das hier halbkugelförmig ausgebildete Schließelement 50 ausgebildet ist, ferner durch ein Ventil 75.

Aus der Darstellung gemäß Figur 2 geht hervor, dass das Gehäuse 36 darüber hinaus eine Düse 58 umfasst, die eine Düsenöffnung 56 aufweist. Der Betriebs-/Hilfsstoff gelangt aus dem Pumpenraum 54 eines Druckventiles 75 über Bohrungen in einen Federraum, von dort über eine Öffnung 83 in einem weiteren Federhalter 80 zu einem Kanal 68, der sich durch ein im Wesentlichen zylindrisch ausgebildetes Füllstück 66 erstreckt. Bei dem Füllstück 66 handelt es sich um ein solches aus einem Werkstoff, der einen relativ niedrigen Kompressionsmodul besitzt. Aufgrund dieses Umstandes kann ein ansonsten steil verlaufender Druckanstieg sowie ein steiler Druckabbau vor der Düse 58 verhindert werden. Durch die Ausbildung eines allmählichen, d.h. mit einer geringeren Steigung verlaufenden Druckanstiegs, werden Druckschwingungen vor der Düse 58 reduziert und mögliche Nacheinspritzungen vermieden. Des Weiteren kann durch diese Maßnahme in vorteilhafter Weise bei sich einstellendem Gefrieren des Betriebs-/Hilfsstoffes, was bei Außentemperaturen von -11°C auftritt, der maximale Eisdruck signifikant reduziert werden.

Der Vollständigkeit halber sei erwähnt, dass sich von der Öffnung 83 im Federhalter 80 durch das Füllstück 66 mindestens ein, beispielsweise symmetrisch ausgebildeter Kanal 68 zur Düse 58 erstreckt.

Der Pumpenraum 54 wird bei dem in Figur 2 dargestellten Dosiermodul einerseits durch den Sitz des Druckventiles 75 und andererseits durch das halbkugelförmig ausgebildete Schließelement 50 verschlossen. Das Volumen des Pumpenraumes 54 ist zu minimieren, damit eine rasche Entlüftung desselben erfolgen kann. Über einen Durchgangskanal, welcher sich durch den Pumpenkolben 40 erstreckt und am Ventilsitz 51 mündet, wird der Pumpenraum 54 durch Nachströmen des Betriebs-/Hilfsstoffes entlang des Füllpfades 38 befüllt.

Bei der in Figur 2 dargestellten Ausführungsvariante ist das dort halbkugelförmig ausgestaltete Schließelement 50 von außerhalb des Pumpenraumes 54 eben mittels jenes stangen- oder stabförmig ausgebildeten Betätigungselementes 74 betätigbar. Diese befindet sich außerhalb des Pumpenraumes 54. Bei Bestromung der Magnetspule 48 und einer dementsprechenden Bewegung des Ankers 46 wird der Pumpenkolben 40 verschoben, so dass das Schließelement 50 öffnet und der Pumpenraum 54 bei einer Einfahrbewegung der diesen begrenzenden Stirnseite des Pumpenkolbens 40 druckentlastet wird und dass in diesem vorhandene Volumen in Richtung der Düse 58 gefördert wird.

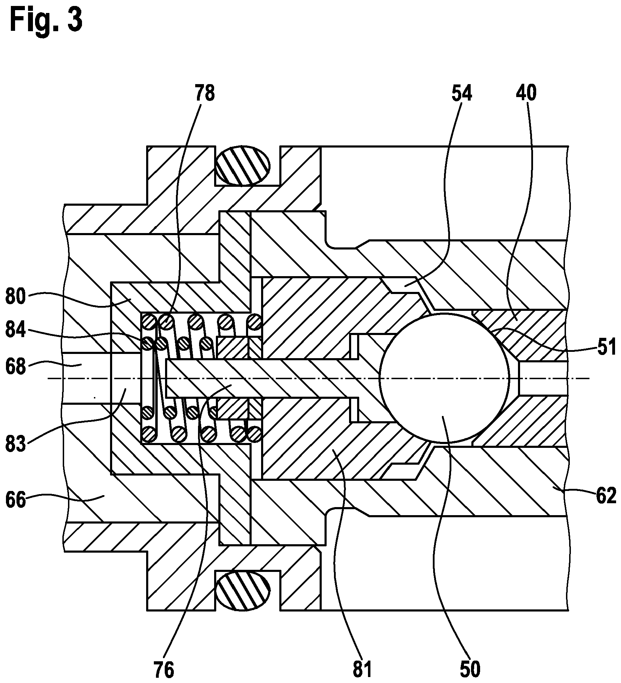

Figur 3 ist eine Ausführungsform des erfindungsgemäß vorgeschlagenen Dosiermodules für ein Abgasnachbehandlungssystem zu entnehmen.

Aus der Darstellung gemäß Figur 3 ist entnehmbar, dass das Schließelement 50 als Kugelkörper ausgebildet ist. Das Schließelement 50 wird über einen Druckbolzen 76 in den Ventilsitz 51 gedrängt, der an der dem Schließelement 50 zuweisenden Stirnseite des Pumpenkolbens 40 ausgebildet ist. Das hier kugelförmig ausgebildete Schließelement 50 ist durch einen Druckbolzen 76 beaufschlagt, der sich durch den weiteren Federhalter 80 erstreckt. Der weitere Federhalter 80 seinerseits nimmt ein Federelement 78 auf, das sich einerseits am weiteren Federhalter 80 abstützt und andererseits eine Stirnseite eines Ventilkörpers 81 beaufschlagt. Der Ventilkörper 81 ist von der Führungshülse 62 ebenso umschlossen wie der zylindrisch ausgebildete Pumpenkolben 40. Mittels des Druckbolzens 76 wird das Schließelement 50 in den Ventilsitz 51 gedrückt. Das Federelement 78 wiederum beaufschlagt den Ventilkörper 81, der in seinen Sitz gedrängt wird, der sich in der Führungshülse 62 befindet. Durch diese beiden Sitze, d.h. den Ventilsitz 51 und den in der Führungshülse 62 ausgebildeten Ventilsitz für den Ventilkörper 81 wird der Pumpenraum 54 verschlossen. Bei der Förderung des Betriebs-/Hilfsstoffes wird über den dann geöffneten Ventilsitz 51 der Betriebs-/Hilfsstoff in den Raum innerhalb des weiteren Federhalters 80 gefördert, in dem sich das mindestens eine Federelement 78 befindet. Von dort strömt der Betriebs-/Hilfsstoff über die Öffnung 83 in den Kanal 68 des Füllstücks 66.

Im Gehäuse 36 des Dosiermodules 28 für das Abgasnachbehandlungssystem 10 gemäß Figur 1 befindet sich ein Flansch, welcher den Befüllpfad 38 darstellt. Analog zur Darstellung gemäß Figur 2 ist der Pumpenkolben 40 von einer Führungshülse 62 umschlossen, an der sich die Rückstellfeder 42 abstützt. Die Rückstellfeder 42 wirkt auf eine Schulter, die an der Mantelfläche des zylindrisch ausgebildeten Pumpenkolben 40 ausgebildet ist. Der Pumpenkolben 40 weist an einer Stirnseite eine Einstellscheibe 44 auf, über welche der Hub des Pumpenkolbens 40 eingestellt werden kann. Eine Hubbewegung, die sich in axiale Richtung vollzieht, wird dem Pumpenkolben 40 bei Bestromung der den Anker 46 umschließenden Magnetspule 48 aufgeprägt. Der Pumpenraum 54 ist mit minimalem Volumen ausgelegt. Der Pumpenraum 54 ist durch die Führungshülse 62, die den Pumpenkolben 40 umschließt, sowie den Ventilkörper 81 begrenzt.

Im Gehäuse 36 ist die Magnetspule 48 aufgenommen. Die Magnetspule 48 umschließt den Anker 46, der seinerseits die Führungshülse 62, welche den Pumpenkolben 40 umgibt, umschließt. Die Führungshülse 62 begrenzt des Weiteren den mit einem kleinstmöglichen Volumen ausgelegten Pumpenraum 54, ebenso wie der Ventilkörper 81, und der dem Pumpenraum 54 zuweisenden Stirnseite des Pumpenkolbens 40, an der der Ventilsitz 51 ausgeführt ist.

Aus der Darstellung gemäß Figur 3 lässt sich des Weiteren entnehmen, dass der Druckbolzen 76 durch ein weiteres Federelement 84 beaufschlagt ist, das sich ebenfalls wie das Federelement 78 am Federhalter 80 abstützt. Der Druckbolzen umfasst einen hier scheibenförmig ausgebildeten Anschlag gegen den das weitere Federelement 84 wirkt, wobei der Druckbolzen 76 verschieblich im Ventilkörper 81 angeordnet ist und eine gerundete Fläche aufweist. Die Rundung der Fläche am Druckbolzen 76 ist komplementär zur Rundung des kugel- oder halbkugelförmig ausgebildeten Schließelementes 50 ausgeführt.

## Patentansprüche

1. Vorrichtung zur Förderung eines Fluides, insbesondere eines Betriebs-/Hilfsstoffes in einem Abgasnachbehandlungssystem (10), mit einem Dosiermodul (28), das eine Düse (58) zum Eindosieren des Fluides in eine Abgasströmung (34) aufweist, und das Dosiermodul (28) einen von einem Pumpenkolben (40) beaufschlagbaren Pumpenraum (54) umfasst, der durch ein als Kugel- oder Halbkugelkörper ausgeführtes Schließelement (50) im Strömungspfad des Fluides begrenzt ist, das von außerhalb des Pumpenraumes (54) betätigbar ist; wobei der Pumpenraum (54) von einem Ventilkörper (81), dem mit einem Ventilsitz (51) zusammenwirkenden Schließelement (50) und einer den Pumpenkolben (40) umgebenden Führungshülse (62) begrenzt ist; wobei der Ventilkörper (81) durch mindestens ein Federelement (78) beaufschlagt ist, das sich an einem Federhalter (80) abstützt; wobei ein Druckbolzen (76) durch ein weiteres Federelement (84) beaufschlagt ist, das sich am Federhalter (80) abstützt; und wobei das Schließelement (50) über dem Druckbolzen (76) in den Ventilsitz (51) gedrängt wird, der an der dem Schließelement (50) zuweisenden Stirnseite des Pumpenkolbens (40) ausgebildet ist.

2. Vorrichtung zur Förderung eines Fluides gemäß Anspruch 1, **dadurch gekennzeichnet, dass** der Pumpenraum (54) volumenminimiert ausgeführt ist.

3. Vorrichtung gemäß Anspruch 1, **dadurch gekennzeichnet, dass** der Pumpenkolben (40) einen Durchgangskanal umfasst, durch den sich ein stab-/stangenförmig ausgebildete Betätigungselement (74, 76) erstreckt.

4. Vorrichtung gemäß Anspruch 3 **dadurch gekennzeichnet, dass** das Betätigungselement (74, 76) an einem weiteren Federhalter (72), an dem sich ein Federelement (70) abstützt, gehalten ist.

5. Vorrichtung gemäß Anspruch 1, **dadurch gekennzeichnet, dass** der Druckbolzen (76) verschieblich im Ventilkörper (81) angeordnet ist und eine gerundete Fläche zur Anlage am Schließelement (50) aufweist.

## Claims

1. Device for conveying a fluid, in particular an operating/auxiliary substance in an exhaust-gas aftertreatment system (10), having a dosing module (28) which has a nozzle (58) for dosing the fluid into an exhaust-gas flow (34), and the dosing module (28) comprises a pump chamber (54) which can be acted on by a pump piston (40) and which is delimited by a closing element (50), designed as a spherical or hemispherical body, in the flow path of the fluid, which closing element is actuatable from outside the pump chamber (54); wherein the pump chamber (54) is delimited by a valve body (81), by the closing element (50) which interacts with a valve seat (51), and by a guide sleeve (62) which surrounds the pump piston (40); wherein the valve body (81) is acted on by at least one spring element (78) which is supported on a spring holder (80); wherein a pressure bolt (76) is acted on by a further spring element (84) which is supported on the spring holder (80); and wherein the closing element (50) is forced, via the pressure bolt (76), into the valve seat (51), which is formed on that end side of the pump piston (40) which points towards the closing element (50).

2. Device for conveying a fluid according to Claim 1, **characterized in that** the pump chamber (54) is of volume-minimized design.

3. Device according to Claim 1, **characterized in that** the pump piston (40) comprises a passage channel through which an actuating element (74, 76) of bar-like/rod-like form extends.

4. Device according to Claim 3, **characterized in that** the actuating element (74, 76) is held on a further spring holder (72), on which a spring element (70) is supported.

5. Device according to Claim 1, **characterized in that** the pressure bolt (76) is arranged displaceably in the valve body (81) and has a rounded surface for abutment against the closing element (50).

## Revendications

1. Dispositif de transport d'un fluide, en particulier d'une matière consommable secondaire dans un système de post-traitement de gaz d'échappement (10), comprenant un module de dosage (28) qui comporte une buse (58) destinée à injecter de manière dosée le fluide dans un flux de gaz d'échappement (34), le module de dosage (28) comprenant une chambre de pompe (54), qui peut être sollicitée par un piston de pompe (40) et qui est délimitée par un élément de fermeture (50), réalisé sous la forme d'un corps sphérique ou hémisphérique, dans le chemin d'écoulement du fluide, lequel élément de fermeture peut être actionné depuis l'extérieur de la chambre de pompe (54) ; la chambre de pompe (54) étant délimitée par un corps de soupape (81), l'élément de fermeture (50) coopérant avec un siège de soupape (51) et un manchon de guidage (62) entourant le piston de pompe (40), le corps de soupape (81) étant sollicité par au moins un élément à ressort (78) qui s'appuie sur un support de ressort (80) ; un boulon de pression (76) étant sollicité par un autre élément à ressort (84) qui s'appuie sur le support de ressort (80) ; et l'élément de fermeture (50) étant poussé par le boulon de pression (76) jusque dans le siège de soupape (51) qui est formé sur la face d'extrémité du piston de pompe (40) qui est tournée vers l'élément de fermeture (50).

2. Dispositif de transport d'un fluide selon la revendication 1, **caractérisé en ce que** la chambre de pompe (54) est conçue de manière à avoir un volume minimum.

3. Dispositif selon la revendication 1, **caractérisé en ce que** le piston de pompe (40) comprend un conduit de passage qui est traversé par un élément d'actionnement (74, 76) en forme de tige ou de barre.

4. Dispositif selon la revendication 3, **caractérisé en ce que** l'élément d'actionnement (74, 76) est maintenu sur un autre support de ressort (72) sur lequel s'appuie un élément à ressort (70).

5. Dispositif selon la revendication 1, **caractérisé en ce que** le boulon de pression (76) est disposé de manière coulissante dans le corps de soupape (81) et présente une surface arrondie destinée à venir en appui sur l'élément de fermeture (50).
